# EUROPEAN PATENT SPECIFICATION

(11) **EP 0 826 561 B1**
(45) Date of publication and mention of the grant of the patent: **17.07.2002**
(21) Application number: 96113731.2
(22) Date of filing: 28.08.1996
(51) Int. Cl.: B60R 21/20

(54) **Air bag door arrangement**
Airbag-Abdeckungsanordnung
Garniture de recouvrement d'un coussin gonflable

(43) Date of publication of application: 04.03.1998
(73) Proprietor: DAVIDSON TEXTRON INC., Dover New Hampshire 03820-1504 (US)
(72) Inventor: Gray, John, Union, New Hampshire 03887 (US); Batchelder, Bruce, Lee, New Hampshire 03824 (US); Rogers, Jim, Berwick, Maine 03901 (US); Booth, Robert, Sanford, Maine 04078 (US)
(74) Representative: Hoeger, Stellrecht & Partner

(56) References cited:
- US-A- 5 322 324
- US-A- 5 385 366
- US-A- 5 393 088
- US-A- 5 445 410
- US-A- 5 496 059
- PATENT ABSTRACTS OF JAPAN vol. 017, no. 610 (M-1508) 10 November 1993 & JP 05 185 898 A (KANSEI CORP) 27 July 1993

## Description

### BACKGROUND OF THE INVENTION

This invention relates to an air bag door arrangement for an air bag canister that is located behind an automotive trim product, such as an instrument panel. The invention is applicable to separate door arrangements but is particularly well suited for an integral air bag door arrangement in which the covering for the air bag door is an integral part of the covering for the trim product.

U.S. Patent 5,280,947 granted to Robert Cooper January 25, 1994 discloses an integral air bag door arrangement that includes a sheet metal door assembly. The sheet metal door assembly is attached to a substrate and concealed by an outer uninterrupted cover for the substrate which forms part of an automotive trim product such as an instrument panel, console or steering wheel pad.

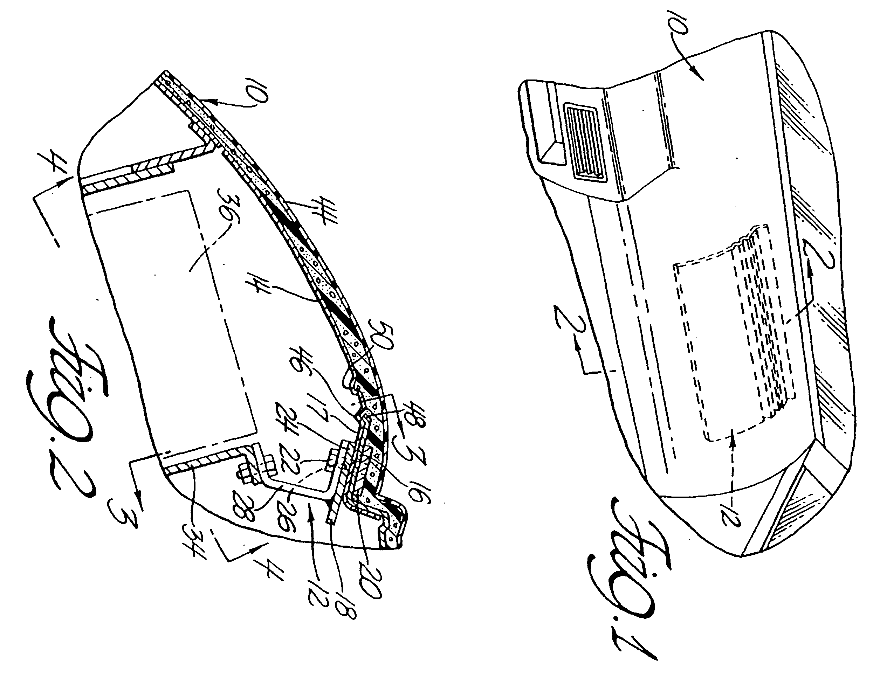

In the Cooper arrangement, the sheet metal door assembly has an H-shaped cut that provides two air bag doors that are integrally attached to a rectangular frame at opposite sides of the frame. This rectangular frame and a structural support for an air bag canister are attached to the substrate by fasteners such as rivets, heat stakes, bolts or screws. These fasteners are spaced along the rectangular frame of the sheet metal door assembly as shown in figure 1 of the Cooper patent.

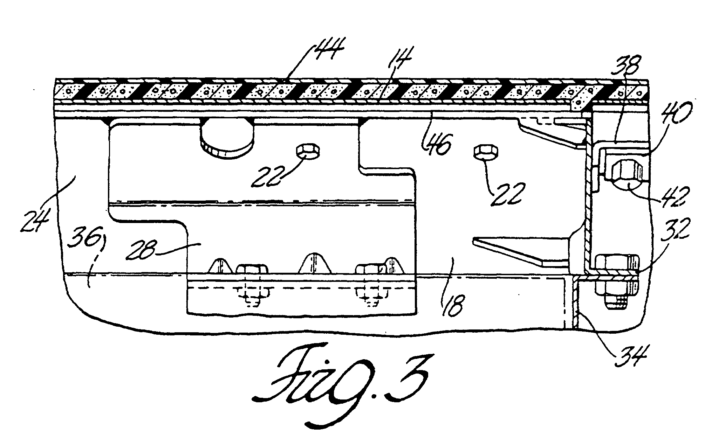

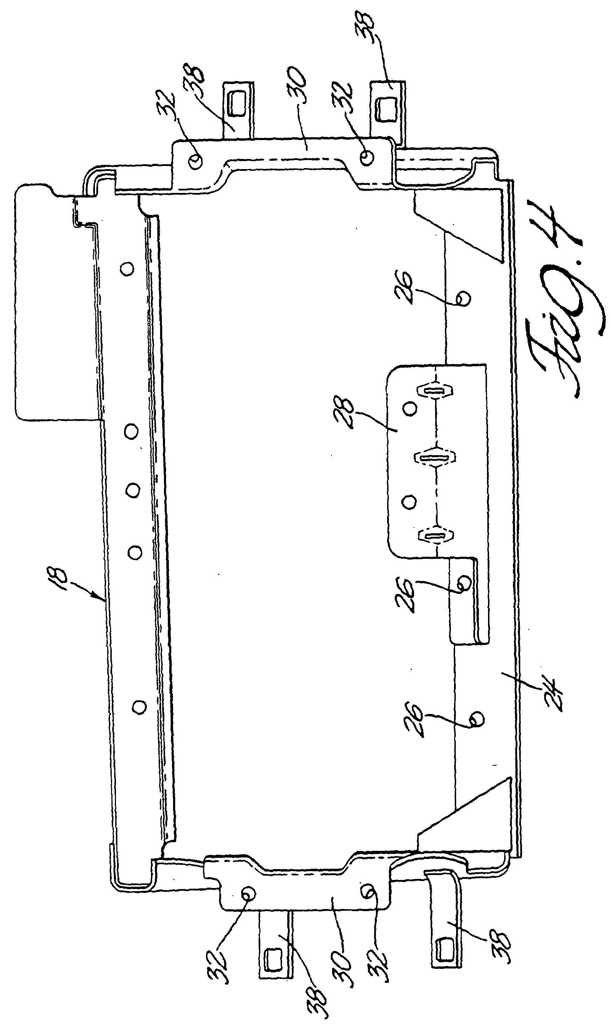

In the Cooper arrangement, the reaction force of the air bag canister is applied to the substrate and the integrally attached doors are bent around the substrate when the air bag is deployed as shown in figure 3 of the Cooper patent.

U.S. patent 5,496,059 discloses an air bag arrangement according to the preamble portion of claim 1. One end of the air bag door is connected to the substrate by fasteners extending through a reinforcing layer disposed below the end of the door. The fasteners hold all three layers, i.e. the substrate edge, the door end and the reinforcing layer, together. The reinforcing layer extends from a rigid reaction frame disposed around the air bag door opening into which an air bag receptacle is mounted.

U.S. patent 5,393,088 discloses an air bag door system that includes a stabilizer frame fixed around an opening in an instrument panel substrate and anchored to a fixed vehicle substructure. The stabilizer frame restrains bulging movement of the instrument panel to rapidly develop shearing stresses in a covering layer due to pressure exerted by a substrate panel as it is pushed open by an inflating air bag. The stabilizer frame includes brackets for mounting the frame to the fixed substructure.

DE 43 26 554 A1 discloses an air bag closure assembly that includes a metal air bag door substrate including two lateral creases apparently configured to guide bending of the metal substrate as the air bag door is opened by the force of air bag inflation.

The object of this invention is to provide an air bag door arrangement in which the attachment of the air bag door to the substrate is reinforced and the substrate is isolated from the reaction force of the air bag canister resulting from the air bag deployment.

A feature of the invention is that the arrangement includes an air bag door that is attached to the trim product substrate by fasteners that pass through the substrate and fasten to a reinforcement bar that is located on the covered side of the substrate.

Another feature of the invention is that the arrangement includes an air bag door having an end that is sandwiched between a frame and a trim product substrate and attached to the substrate by fasteners that clamp the end to the substrate by means of the frame and a reinforcement bar that is located on the covered side of the substrate.

Still another feature of the invention is that the arrangement includes an air bag door that is attached to the substrate by a dual purpose frame that supports an air bag canister and that is adapted to isolate the substrate from the reaction force of the canister produced by deployment of the air bag.

Still yet another feature of the invention is that the arrangement includes an air bag door having an end that is clamped to the substrate by a reinforcement bar that is located on the covered side of the substrate and a dual purpose frame that supports the air bag canister and that is adapted to isolate the substrate from the reaction force of the canister produced by deployment of the air bag.

### BRIEF DESCRIPTION OF THE DRAWINGS

The above and other objects, features and advantages of the invention will become more apparent from the following description taken in conjunction with the accompanying drawings wherein like references refer to like parts and wherein:
Figure 1 is a fragmentary perspective view of an automobile interior showing an air bag door arrangement in accordance with the invention;
Figure 2 is a section taken substantially along the line 2-2 of figure 1 looking in the direction of the arrows;
Figure 3 is a section taken substantially along the line 3-3 of figure 2 looking in the direction of the arrows; and
Figure 4 is a bottom view of the dual purpose frame of the invention taken substantially along the line 4-4 of figure 2 looking in the direction of the arrows.

### DESCRIPTION OF THE INVENTION

Referring now to the drawing, Figure 1 illustrates an interior of an automobile that includes an instrument panel 10 that is equipped with an air bag arrangement of the invention which is indicated generally at 12.

The air bag arrangement 12 comprises a door 14 that is attached to a substrate 16 of the instrument panel 10 to close an opening in the substrate 16 for deployment of an air bag into the passenger compartment of the automobile. The door 14 is customarily made of aluminum or other light metal, but may be made of a molded plastic material. The substrate 16 is generally molded of a fiber reinforced structural plastic material.

The door 14 has a hinged end 17 that is attached to the substrate 16 by clamping the hinged end beneath an edge portion of the substrate 16 that is next to the air bag opening. The hinged end 17 is clamped to the substrate by a frame 18 that is beneath the substrate 16, a reinforcement bar 20 that is above the edge portion of the substrate 16, that is on the covered side of the substrate 16, and a plurality of fasteners 22, such as sheet metal screws that force the frame 18 and reinforcement bar 20 toward each other.

The frame 18 is generally rectangular as best: shown in figure 4. It includes a front bar 24 that has a plurality of holes 26 for receiving the shanks of the fasteners 22 that are attached to the reinforcement bar 20. The frame 18 further includes a front bracket 28 that is welded or otherwise suitably secured to the front bar 20 and two side flanges 30. The bracket 28 and the two side flanges 30 each have two holes 32. These six holes 32 are used to bolt or otherwise suitably attach an air bag canister 34 beneath the air bag opening of the substrate 16 as shown in figure 2.

The air bag canister 34 houses a deflated air bag which is schematically shown at 36 and which operates in a well known manner. Briefly, the air bag is inflated by a gas generator (not shown) and deployed in the passenger compartment through the air bag opening when the automobile decelerates at a rate corresponding to a front end collision.

Returning to figure 4, the frame 18 further includes four side brackets 38. Two brackets are attached to each side of the frame 18. These brackets are used to attach the frame 18 to automotive body structure such as a cross car beam, front of dash panel, fire wall, or floor pan. The automobile structure is schematically represented at 40 in figure 3. The frame 18 is attached to the automobile structure 40 by the side brackets 38 and fasteners 42, such as nuts and bolt shown in figure 3.

The instrument panel 12 includes a covering 44 that covers the substrate 16 and the door 14 so that the covering of the door is an integral part of the covering of the instrument panel 12. The covering 44 comprises an outer skin and an underlying layer of foam, that are customarily made of compatible thermoplastic materials, such as polyvinylchloride and polyvinychloride foam or polyurethane and polyurethane foam. The outer skin is preferably weakened to provide tear lines for separating the portion that covers the door 14 in a predictable manner when the air bag is deployed. These tear lines can be internal and invisible or external style lines.

The door 14 is attached to the substrate 16 before the door 14 and substrate 16 are covered by the outer covering 44. The canister 34 may be attached to the frame 18 either before or after the instrument panel is covered. In fact the canister 34 may be attached to the frame 18 after the instrument panel 10 is installed in the automobile.

In any event, the installed instrument panel 10 and canister 34 work in a well known manner. When the air bag 36 is deployed, the air bag 36 engages the metal door 14 and pivots the metal door 14 outwardly about the edge of the substrate 16. The metal door 14 preferably includes a crease 46 that underlies an inturned lip 48 of the substrate 16. The crease 46 defines a primary hinge line of the door 14 which then pivots about the inturned lip 48 to open. The metal door 14 also preferably includes a second crease 50 that is spaced from the primary hinge crease 46 toward the free end of the door 14. This second crease provides a secondary hinge line which allows the door 14 to flex without bending at the hinge point during the initial deployment of the air bag.

As the door 14 is pivoted outwardly by the inflating air bag, the covering 44 is ruptured at the front or free edge of the door 14 and then along the sides of the door 14 forming a flap in the covering 44 that is opened along with the door 14 under the action of the inflating air bag 36. The reaction force imparted to the canister 34 by the inflating air bag 36 is transferred to the automotive body structure 40 by the frame 18 and brackets 38. This isolates the substrate 16 from the reaction force of the canister 34 produced by the inflation of air bag 34.

This isolation and the reinforced attachment each permit use of a thinner substrate while assuring that the door 14 remains attached to the substrate when the air bag 34 is deployed. On the other hand the isolation in combination with the reinforced attachment provides the best advantage.

It is to be understood that, within the scope of the appended claims, the invention may be practiced otherwise than as specifically described.

## Claims

1. An air bag arrangement including a trim product having a substrate (16) that has an air bag opening and an uninterrupted covering (44) over the opening, said air bag arrangement comprising:
a door (14) that has an end (17) that is attached to the substrate by clamping the end beneath an edge portion of the substrate that is next to the air bag opening,
the end being clamped to the substrate by a member (18) that is beneath the substrate,
the member (18) including means (30) for attaching an air bag canister beneath the air bag opening of the substrate,
**characterized in that** the end (17) is clamped to the substrate by a reinforcement bar (20) that is above the edge portion of the substrate, and a plurality of fasteners (22) that force the member and reinforcement bar toward each other,
the member (18) including further means (38) for transferring a reaction force to automotive body structure so that the substrate is isolated from the reaction force of an inflating air bag housed in the air bag canister.

2. The air bag arrangement as defined in claim 1 wherein the member is a generally rectangular frame that includes a bar (24) and a bracket (28) that is secured to the bar of the frame and side flanges (30), and an air bag canister is attached to the frame by the bracket and side flanges.

3. The air bag arrangement as defined in claim 1 wherein the member includes side brackets (38) for attaching the frame to the automobile body structure so that a reaction force imparted to the canister by an inflating air bag is transferred to the automotive body structure by the frame and the brackets and the substrate is isolated from the reaction force of the inflating air bag.

4. The air bag arrangement as defined in claim 1 wherein the air bag door (14) is a metal door that includes a crease (46) that underlies an inturned lip (48) of the substrate and that defines a hinge line of the door when it is pivoted open.

5. The air bag arrangement as defined in claim 4 wherein the metal door further includes a second crease (50) that is spaced from the aforementioned crease toward a free end of the door.

6. The air bag arrangement as defined in claim 1 wherein the reinforcement bar (20) is between the substrate (16) and the uninterrupted covering.

7. The air bag arrangement as defined in claim 1 wherein said bar (24) has a plurality of holes (26) for receiving shanks of the fasteners (22) that force the member and the reinforcement bar toward each other.

## Patentansprüche

1. Airbag-Anordnung mit einer Verkleidung, die ein Substrat (16) aufweist, welches eine Airbag-Öffnung und eine ununterbrochene Abdeckung (44) über der Öffnung aufweist, wobei die Airbag-Anordnung umfasst:
eine Tür (14), die ein Ende (17) aufweist, welches an dem Substrat durch Klemmen des Endes unterhalb eines Randbereichs des Substrats, der der Airbag-Öffnung benachbart ist, festgelegt ist,
wobei das Ende mittels eines Elements (18), das unterhalb des Substrats angeordnet ist, an das Substrat geklemmt ist,
wobei das Element (18) ein Mittel (30) zum Festlegen eines Airbag-Behälters unterhalb der Airbag-Öffnung des Substrats umfasst,
**dadurch gekennzeichnet, dass** das Ende (17) mittels eines Verstärkungsriegels (20), der oberhalb des Randbereichs des Substrats angeordnet ist, und einer Mehrzahl von Befestigungsmitteln (22), die das Element und den Verstärkungsriegel gegeneinander drücken, an das Substrat geklemmt ist,
wobei das Element (18) ferner ein Mittel (38) zum Übertragen einer Reaktionskraft auf die Karosseriestruktur eines Kraftfahrzeugs umfasst, so dass das Substrat von der Reaktionskraft eines sich aufblasenden Airbags, der in dem Airbag-Behälter aufgenommen ist, isoliert ist.

2. Airbag-Anordnung nach Anspruch 1, wobei das Element ein im Wesentlichen rechteckiger Rahmen ist, der einen Riegel (24) und einen Halter (28), welcher an dem Riegel des Rahmens festgelegt ist, und Seitenflansche (30) umfasst, und wobei ein Airbag-Behälter mittels des Halters und der Seitenflansche an dem Rahmen festgelegt ist.

3. Airbag-Anordnung nach Anspruch 1, wobei das Element Seitenhalter (38) zum Festlegen des Rahmens an der Karosseriestruktur eines Kraftfahrzeugs umfasst, so dass eine von einem sich aufblasenden Airbag auf den Behälter ausgeübte Reaktionskraft durch den Rahmen und die Halter auf die Karosseriestruktur des Kraftfahrzeugs übertragen wird und das Substrat von der Reaktionskraft des sich aufblasenden Alrbags lsoliert ist.

4. Airbag-Anordnung nach Anspruch 1, wobei die Airbag-Tür (14) eine Metalltür ist, die einen Falz (46) umfasst, welcher unter einer einwärts gedrehten Lippe (48) des Substrats angeordnet ist und welcher eine Angellinie der Tür definiert, wenn sie aufgeschwenkt wird.

5. Airbag-Anordnung nach Anspruch 4, wobei die Metalltür ferner einen zweiten Falz (50) umfasst, der von dem vorstehend erwähnten Falz zu einem freien Ende der Tür hin beabstandet ist.

6. Airbag-Anordnung nach Anspruch 1, wobei der Verstärkungsriegel (20) zwischen dem Substrat (16) und der ununterbrochenen Abdeckung angeordnet ist.

7. Airbag-Anordnung nach Anspruch 1, wobei der Riegel (24) eine Mehrzahl von Löchern (26) zur Aufnahme von Schäften der Befestigungsmittel (22), die das Element und den Verstärkungsriegel gegeneinander drücken, aufweist.

## Revendications

1. Agencement de coussin gonflable comprenant un produit de garniture ayant un substrat (16) qui présente une ouverture de coussin gonflable et un revêtement ininterrompu (44) au-dessus de l'ouverture, ledit agencement de coussin gonflable comportant :
une trappe (14) qui a une extrémité (17) qui est fixée sur le substrat en serrant l'extrémité sous une partie de bord du substrat qui est proche de l'ouverture de coussin gonflable,
l'extrémité étant serrée sur le substrat par un élément (18) qui est en dessous du substrat,
l'élément (18) comprenant des moyens (30) destinés à fixer une boîte de coussin gonflable sous l'ouverture de coussin gonflable du substrat,
**caractérisé en ce que** l'extrémité (17) est serrée sur le substrat par une barre de renfort (20) qui est au-dessus de la partie de bord du substrat, et plusieurs éléments de fixation (22) qui forcent l'élément et la barre de renfort l'un vers l'autre,
l'élément (18) comprenant d'autres moyens (38) destinés à transférer une force de réaction vers la structure de carrosserie d'automobile de telle sorte que le substrat est isolé de la force de réaction d'un coussin gonflable qui se gonfle logé dans la boîte de coussin gonflable.

2. Agencement de coussin gonflable selon la revendication 1, dans lequel l'élément est un cadre globalement rectangulaire qui comprend une barre (24) et un support (28) qui est fixé sur la barre du cadre et des rebords latéraux (30), et une boîte de coussin gonflable est fixée sur le cadre par le support et les rebords latéraux.

3. Agencement de coussin gonflable selon la revendication 1, dans lequel l'élément comprend six supports (38), destinés à fixer le cadre sur la structure de carrosserie d'automobile de telle sorte qu'une force de réaction appliquée sur la boîte par un coussin gonflable qui se gonfle est transférée à la structure de carrosserie d'automobile par le cadre et les supports et le substrat est isolé de la force de réaction du coussin gonflable qui se gonfle.

4. Agencement de coussin gonflable selon la revendication 1, dans lequel la trappe de coussin gonflable (14) est une trappe en métal qui comprend un pli (46) qui s'étend sous une lèvre rabattue (48) du substrat et qui définit une ligne d'articulation de la trappe lorsqu'elle est pivotée en position ouverte.

5. Agencement de coussin gonflable selon la revendication 4, dans lequel la trappe métallique comprend en outre un deuxième pli (50) qui est espacé du pli mentionné ci-dessus vers une extrémité libre de la trappe.

6. Agencement de coussin gonflable selon la revendication 1, dans lequel la barre de renfort (20) est entre le substrat (16) et le revêtement ininterrompu.

7. Agencement de coussin gonflable selon la revendication 1, dans lequel ladite barre (24) possède plusieurs trous (26) destinés à recevoir des tiges des éléments de fixation (22) qui forcent l'élément et la barre de renfort l'un vers l'autre.
